(19) Europäisches Patentamt

European Patent Office

Office européen des brevets

(11) **EP 1 259 789 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **01919339.0**

(22) Anmeldetag: **24.02.2001**

(51) Int Cl.$^7$: **G01M 13/02**

(86) Internationale Anmeldenummer:
**PCT/EP2001/002106**

(87) Internationale Veröffentlichungsnummer:
**WO 2001/065227 (07.09.2001 Gazette 2001/36)**

(54) **VERFAHREN ZUM BESTIMMEN EINES REIBWERTS**

METHOD FOR DETERMINING A FRICTION VALUE

PROCEDE PERMETTANT DE DETERMINER UN COEFFICIENT DE FROTTEMENT

(84) Benannte Vertragsstaaten:
**DE FR GB IT SE**

(30) Priorität: **01.03.2000 DE 10009860**

(43) Veröffentlichungstag der Anmeldung:
**27.11.2002 Patentblatt 2002/48**

(73) Patentinhaber: **ZF FRIEDRICHSHAFEN AG
88038 Friedrichshafen (DE)**

(72) Erfinder:
• **KÜHNER, Karl
88048 Friedrichshafen (DE)**
• **SIEGER, Manfred
88046 Friedrichshafen (DE)**
• **GEIS, Jörg
88677 Markdorf (DE)**
• **SCHWARZ, Andreas
88085 Langenargen (DE)**

(56) Entgegenhaltungen:
**EP-A- 0 709 602         DE-A- 4 304 596**

Printed by Jouve, 75001 PARIS (FR)

**Beschreibung**

Die Erfindung betrifft ein Verfahren zum Bestimmen eines Reibwerts nach dem Oberbegriff von Anspruch 1.

Aus der EP 0 770 195 B1 ist ein Verfahren zum Steuern eines von einer Brennkraftmaschine angetriebenen Automatgetriebes bekannt, bei dem eine Schaltung von einem ersten in ein zweites Übersetzungsverhältnis erfolgt, indem eine erste Kupplung öffnet und eine zweite Kupplung schließt. An die Stelle einer Kupplung kann auch eine Bremse treten, über die das Drehmoment eines Antriebselements am Getriebegehäuse abgestützt werden kann. Ein elektronisches Steuergerät steuert über elektromagnetische Ventile den Druckverlauf der ersten und zweiten Kupplung während des Schaltvorgangs. Es bestimmt aufgrund von Eingangsgrößen eine erste und zweite Schaltungsart, wobei die erste Schaltungsart eine Hochschaltung im Zug bzw. eine Rückschaltung im Schub ist und die zweite Schaltungsart eine Rückschaltung im Zug bzw. eine Hochschaltung im Schub. Die Schaltungsvorgänge werden in beiden Schaltungsarten derart ausgeführt, daß sich einer Schnellfüllphase der hydraulischen Betätigungselemente eine Füllausgleichsphase anschließt und daran eine Lastübernahme- und Schließphase folgt. In der ersten Schaltungsart folgt der Lastübernahmephase eine Gradient-Einstellphase mit einer Gleitphase und vor der Schließphase eine Gradient-Abbauphase. In der zweiten Schaltungsart folgt der Füllausgleichsphase eine Gradient-Einstellphase mit einer Gleitphase und vor der Lastübernahmephase eine Gradient-Abbauphase.

Für eine schnelle, ruckfreie Schaltung ist es wichtig, daß der Punkt, an dem die Kupplung bzw. Bremse gerade noch oder gerade schon ein Lastmoment übertragen, schnell angesteuert werden kann. Dieser Punkt ist abhängig vom Reibwert und Reibwertverlauf der Kupplung. Daher ist es für eine gute Schaltqualität wichtig, möglichst genau den aktuellen Reibwert der Kupplung bzw. Bremse zu kennen und der Steuerung bzw. der Regelung zugrunde zu legen. Insbesondere bei einem momentenbasierten, analytischen Lastschaltverfahren muß der Moment-Druck-Zusammenhang für die gesamte Schaltung bekannt sein.

Für zahlreiche Getriebe, insbesondere Baumaschinengetriebe, ist eine Vielzahl von Ölen freigegeben. Da der Reibwert der Kupplung bzw. der Bremse sich in Abhängigkeit von der Ölsorte ändert, wird jedes Getriebe für jede Ölsorte neu abgestimmt. Füllt der Hersteller von Baumaschinen oder eine Werkstatt nach dem Abstimmen ein anderes Öl ein, verschlechtert sich die Schaltqualität. Der Reibwert kann sich aber auch im Lauf der Zeit durch Verschleiß und Alterung ändern. Stimmt der Moment-Druck-Zusammenhang nicht mehr, ist ein Durchgehen der Turbine eines vorgeschalteten hydrodynamischen Wandlers bzw. ein Verspannen des Getriebes möglich.

Aus der EP 0 709 602 B1 ist ein Eichverfahren für Kupplungen in einem Getriebe bekannt. Die Kupplungen dienen zum selektiven Verbinden einer Eingangswelle, einer Ausgangswelle und einer Vielzahl von Zahnrädern miteinander , um durch ein selektives Einrücken der Kupplungen eine Änderung der Übersetzungsstufe zu bewirken. Das Verfahren umfaßt folgende Schritte: Festhalten der Ausgangswelle gegen Drehung, Bestimmen einer Bezugsdrehzahl der Eingangswelle, Anlegen eines Hydraulikdruck-Vergrößerungsschrittwertes an eine ausgewählte Kupplung, Messen der derzeitigen Drehgeschwindigkeit der Eingangswelle nach dem Schritt des Anlegens, Vergleichen der derzeitigen Eingangsdrehzahl mit der Bezugsdrehzahl nach dem Meßschritt, Wiederholen der Schritte des Anlegens, Messens und Vergleichens, bis die derzeitige Drehzahl der Eingangswelle kleiner als die Bezugsdrehzahl ist, wodurch angezeigt wird, daß die Eingangswelle belastet wird, Speichern eines Werts, der dem Hydraulikdruck entspricht, der zum Beginn der Belastung der Eingangswelle erforderlich ist in dem elektrischen Steuersystem. Durch das bekannte Verfahren wird zwar der Punkt der Lastübernahme der Kupplung bestimmt, indem der zugeordnete Betätigungsdruck definiert wird, es wird jedoch kein Reibwert bestimmt, der für den gesamten Ablauf, insbesondere für die Gradient-Einstellphase einer momentenbasierten, analytischen Lastschaltung wichtig ist.

Der Erfindung liegt die Aufgabe zugrunde, bei veränderten Betriebsbedingungen mit geringem Aufwand den Reibwert der Kupplungen bzw. Bremsen in einem lastschaltbaren Getriebe neu zu ermitteln. Sie wird gemäß der Erfindung durch die Merkmale des Anspruchs 1 und/oder 2 gelöst. Weitere Ausgestaltungen ergeben sich aus den Unteransprüchen.

Nach der Erfindung wird eine Antriebswelle des Getriebes mit einem bestimmten Drehmoment angetrieben, während bei einem Kalibrierlauf eine Abtriebswelle des Getriebes bei geschlossener Kupplung bzw. Bremse blockiert ist. Dabei wird der Betätigungsdruck der Kupplung bzw. Bremse entsprechend einem vorgegebenen zeitlichen Verlauf reduziert. Gleichzeitig wird die Differenzdrehzahl zwischen dem Eingang und dem Ausgang der Kupplung bzw. Bremse erfaßt, z.B. indem die Differenzdrehzahl der Antriebswelle zur Abtriebswelle gemessen wird. Zu dem Zeitpunkt, zu dem die Differenzdrehzahl größer null wird, wird der Betätigungsdruck erfaßt und aus dem zugehörigen Drehmoment, dem Betätigungsdruck und einer konstruktionsbedingten Kupplungskonstanten ein Abreißreibwert errechnet.

Der Reibwert des Kupplungsbelags, der eine Funktion der Differenzdrehzahl ist, ergibt sich aus folgender Beziehung:

$$\text{Reibwert } \mu = \frac{\text{Betätigungsdruck p * Drehmoment T}}{\text{Kupplungskonstante}}$$

wobei die Kupplungskonstante das Produkt aus der Kupplungsreibfläche, der Reibflächenzahl und dem Reibradius der Kupplung ist. Sie ist durch die Konstruktion der jeweiligen Kupplung bzw. Bremse gegeben und ändert sich nicht, während der Lebensdauer oder aufgrund unterschiedlicher Getriebe-. öle.

Neben dem Abreißreibwert, der charakteristisch für die öffnende Kupplung bzw. Bremse ist, ist es zweckmäßig, auch den dynamischen Reibwert zu bestimmen, der für die schließende Kupplung bzw. Bremse charakteristisch ist. Hierzu wird bei einem Kalibrierlauf eine Abtriebswelle des Getriebes bei geöffneter Kupplung bzw. Bremse blockiert. Die Kupplung bzw. Bremse wird nach einer Schnellbefüllung mit einem konstanten Betätigungsdruck beaufschlagt. Dabei werden der zeitliche Verlauf der Differenzdrehzahl zwischen dem Eingang und dem Ausgang der Kupplung bzw. Bremse und ferner der zeitliche Verlauf des Drehmoments an einer Antriebswelle des Getriebes erfaßt. Aus der konstruktionsbedingten Kupplungskonstanten, dem Betätigungsdruck und dem zugeordneten Drehmoment wird wiederum, diesmal allerdings ein dynamischer Reibwert errechnet, der für die Gleitreibung gilt, solange die Differenzdrehzahl ungleich null ist.

Mit Hilfe der ermittelten Reibwerte, die zweckmäßiger Weise in einem Speichermodul einer Getriebesteuerung abgelegt sind, kann die Schaltqualität des lastschaltbaren Getriebes unter unterschiedlichen Betriebsbedingungen und mit verschiedenen Getriebeölen über seine Lebensdauer konstant gehalten werden.

Damit das erfindungsgemäße Verfahren stets verfügbar ist, wird gemäß einer Ausgestaltung der Erfindung vorgeschlagen, daß es als Software in einem Speichermodul einer Getriebesteuerung abgelegt ist und nach dem Abruf automatisch abläuft. Dies kann z. B. bei abgestelltem Fahrzeug und eingelegter Parkbremse geschehen. Anstelle der Getriebesteuerung kann selbstverständlich jede geeignete Steuereinheit des Fahrzeugs oder Arbeitsmaschine verwendet werden. Ferner ist es zweckmäßig, daß die ermittelten Reibwerte nach einem Kalibrierlauf automatisch von der Getriebesteuerung übernommen werden.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

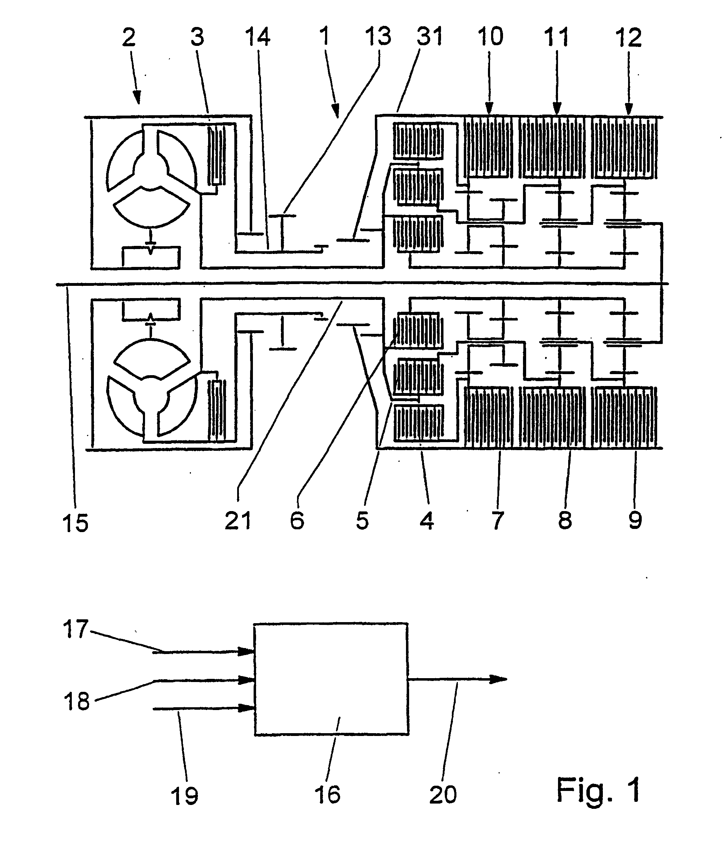

Fig. 1    einen Getriebeplan eines mehrgängigen, lastschaltbaren Getriebes mit einer elektronischen Steuereinheit,

Fig. 2    ein Diagramm zur Ermittlung eines Abreißreibwerts und

Fig. 3    ein Diagramm zur Ermittlung eines dynamischen Reibwerts.

Das dargestellte, lastschaltbare Getriebe 1 ist ein Automatgetriebe mit einem hydrodynamischen Wandler 2, der über ein Antriebsritzel 13 und eine Antriebswelle 14 angetrieben wird und über eine Hohlwelle 21 das nachgeschaltete Zahnräderwechselgetriebe in Planetenbauweise antreibt. Der Wandler 2 kann durch eine Überbrückungskupplung 3 überbrückt werden, die zwischen der Antriebswelle 14 und der Hohlwelle 21 angeordnet ist.

Das Zahnräderwechselgetriebe umfaßt drei Planetensätze 10, 11, 12, deren Zahnräder und Planetenträger über drei Kupplungen 4, 5, 6 und drei Bremsen 7, 8, 9 selektiv untereinander, mit der Hohlwelle 21 und einer Abtriebswelle 15 bzw. mit einem Getriebegehäuse 31 gekoppelt werden können, so daß sich mehrere Vorwärts- und Rückwärtsgänge ergeben.

Das Getriebe 1 besitzt eine Getriebesteuerung 16, durch die in Abhängigkeit von Betriebs- und Fahrparametern entsprechend den in Speichermodulen abgelegten Schaltprogrammen die einzelnen Schaltungen durchgeführt werden. Die Getriebesteuerung dient gleichzeitig zur Ermittlung eines Reibwerts $\mu_{Abreiß}$, $\mu_{dynamisch}$. Sie besitzt dazu einen Eingang 17 zum Erfassen des Verlaufs einer Differenzdrehzahl $\Delta n$ einer der Kupplungen 4, 5, 6 oder der Bremsen 7, 8, 9, einen Eingang 18 zum Erfassen eines Betätigungsdrucks p der genannten Schaltelemente, einen Eingang 19 zum Erfassen eines Drehmoments T, z.B. an der Antriebswelle 14 und einen Ausgang 20, an dem ein Reibwert $\mu$ ausgegeben wird, der aus den Eingangssignalen in Verbindung mit einer Kupplungskonstante errechnet wird, die mit dem erfindungsgemäßen Programm in einem Speichermodul der Getriebesteuerung 16 abgelegt ist.

Um den Abreißreibwert $\mu_{Abreiß}$ einer Kupplung 4, 5, 6 oder Bremse 7, 8, 9 zu ermitteln, wird der Antriebsstrang, in dem die betreffende Kupplung 4, 5, 6 oder Bremse 7, 8, 9 liegt geschaltet und die Antriebswelle 14 mit einem bestimmten Drehmoment T angetrieben, während die Abtriebswelle 15 z.B. durch eine nicht dargestellte Parkbremse blockiert wird. Darauf wird der Betätigungsdruck p der Kupplung 4, 5, 6 bzw. der Bremse 7, 8, 9 entsprechend einem vorgegebenen zeitlichen Verlauf reduziert. Gleichzeitig wird die Differenzdrehzahl $\Delta n$ zwischen dem Eingang und dem Ausgang der Kupplung 4, 5, 6 bzw. der Bremse 7, 8, 9 erfaßt. Zu dem Zeitpunkt, dem Losreißpunkt, wenn die Differenzdrehzahl $\Delta n$ > null wird, wird der Betätigungsdruck p ermittelt und daraus mit dem Drehmoment T und einer konstruktionsbedingten Kupplungskonstanten der Abreißreibwert $\mu_{Abreiß}$ errechnet.

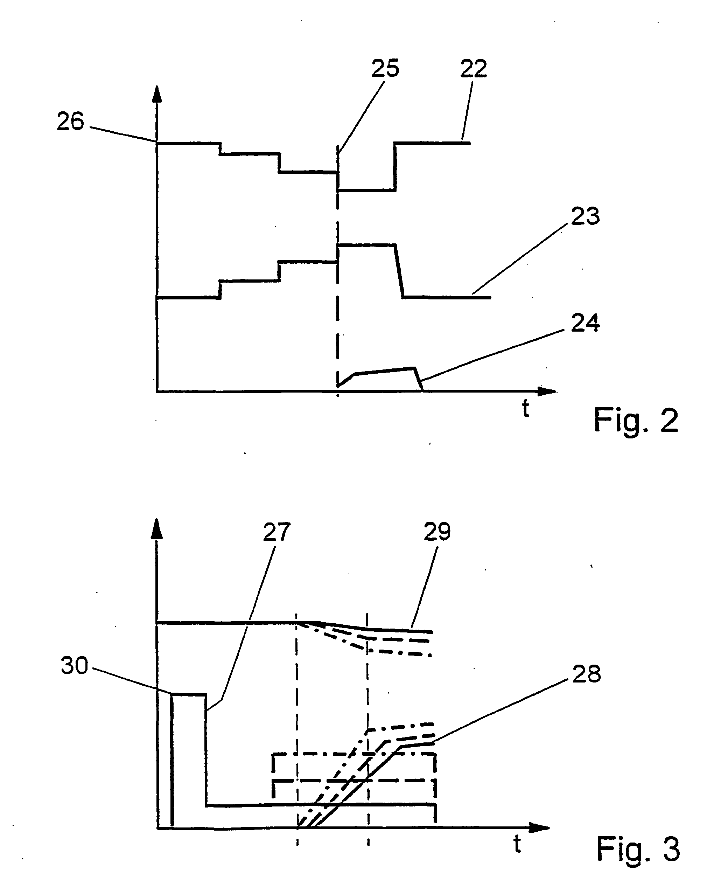

Die Fig. 2 zeigt über der Zeit t eine Kennlinie 22, die den Verlauf des Betätigungsdrucks p kennzeichnet, der stufenweise bis zu dem Losreißpunkt 25 abfällt. Am Losreißpunkt 25 wird die Differenzdrehzahl $\Delta n$, die durch die Kennlinie 24 dargestellt ist, größer null. Der durch die Getriebesteuerung errechnete Reibwert $\mu$ verläuft über der Zeit t entsprechend der Kennlinie 23. Sein Wert im Losreißpunkt 25 wird als Abreißreibwert $\mu_{Abreiß}$ erfaßt und in der Getriebesteuerung 16 in einem Speichermodul abgelegt.

Um den dynamischen Reibwert einer Kupplung 4, 5, 6 oder einer Bremse 7, 8, 9 zu ermitteln, ist die Kupplung 4, 5, 6 bzw. Bremse 7, 8, 9 in dem Antriebsstrang des Getriebes 1 zunächst geöffnet. In Fig. 3 ist der Verlauf des Betätigungsdrucks p der zu untersuchenden Kupplung 4, 5, 6 bzw. der Bremse 7, 8, 9 durch die Kennlinie 27 dargestellt. Zunächst wird ein Fülldruck 30 angelegt, der während einer Schnellfüllphase wirksam ist. Daran schließt sich eine Füllausgleichsphase an, nach der die Kupplung 4, 5, 6 bzw. Bremse 7, 8, 9 mit einem konstanten Betätigungsdruck p beaufschlagt wird. Gleichzeitig wird die Differenzdrehzahl $\Delta n$ zwischen dem Eingang und dem Ausgang der zu untersuchenden Kupplung 4, 5, 6 bzw. Bremse 7, 8, 9 bzw. der Antriebswelle 14 und der blockierten Abtriebswelle 15 überwacht. Sobald die Differenzdrehzahl $\Delta n$ abfällt, wird aus dem Betätigungsdruck p und dem aktuellen Drehmoment T an der Antriebswelle 14 in der Getriebesteuerung 16 der Reibwert $\mu$ errechnet und in einem Speichermodul der Getriebesteuerung 16 abgelegt.

Die Fig. 3 zeigt den zeitlichen Verlauf des dynamischen Reibwerts $\mu_{dynamisch}$ als Kennlinie 28. In gestrichelter und strichpunktierter Linie sind die entsprechenden Kennlinien 28 und 29 dargestellt, die sich ergeben, wenn der Betätigungsdruck p während seiner konstanten Phase entsprechend den ebenfalls gestrichelten bzw. strichpunktierten Linien um bestimmte Beträge angehoben ist.

Bezugszeichen

1 Getriebe
2 Hydrodynamischer Wandler
3 Überbrückungskupplung
4 Kupplung
5 Kupplung
6 Kupplung
7 Bremse
8 Bremse
9 Bremse
10 Planetensatz
11 Planetensatz
12 Planetensatz
13 Antriebsritzel
14 Antriebswelle
15 Abtriebswelle
16 Getriebesteuerung
17 Eingang
18 Eingang
19 Eingang
20 Ausgang
21 Hohlwelle

22 Kennlinie
23 Kennlinie
24 Kennlinie
25 Losreißpunkt
26 Ausgangsdruck
27 Kennlinie
28 Kennlinie
29 Kennlinie
30 Fülldruck
31 Getriebegehäuse

$\mu_{Abreiß}$ Reibwert
$\mu_{dynamisch}$ Reibwert

$\Delta n$ Differenzdrehzahl
p Betätigungsdruck
T Drehmoment
t Zeit

**Patentansprüche**

1. Verfahren zum Bestimmen eines Reibwerts ($\mu$) einer hydraulisch betätigten Kupplung (4, 5, 6) bzw. Bremse (7, 8, 9) in einem lastschaltbaren Getriebe (1), **dadurch gekennzeichnet,**

   - **daß** eine Antriebswelle (14) des Getriebes (1) mit einem bestimmten Drehmoment (T) angetrieben wird,
   - **daß** bei einem Kalibrierlauf eine Abtriebswelle (15) des Getriebes (1) bei geschlossener Kupplung (4, 5, 6) bzw. Bremse (7, 8, 9) blockiert wird,
   - **daß** der Betätigungsdruck (p) der Kupplung (4, 5, 6) bzw. der Bremse (7, 8, 9) entsprechend einem vorgegebenen zeitlichen Verlauf reduziert wird,
   - **daß** die Differenzdrehzahl ($\Delta n$) zwischen dem Eingang (17, 18, 19) und dem Ausgang (20) der Kupplung (4, 5, 6) bzw. der Bremse (7, 8, 9) erfaßt wird,
   - **daß** der Betätigungsdruck (p) ermittelt wird, bei dem die Differenzdrehzahl ($\Delta n$) größer als Null wird und
   - **daß** aus dem Drehmoment (T), dem Betätigungsdruck (p) und einer konstruktionsbedingten Kupplungskonstanten ein Abreißreibwert ($\mu_{Abreiß}$) errechnet wird.

2. Verfahren nach dem Oberbegriff von Anspruch 1, **dadurch gekennzeichnet,**

   - **daß** bei einem Kalibrierlauf eine Abtriebswelle (15) des Getriebes (1) bei geöffneter Kupplung (4, 5, 6) bzw. Bremse (7, 8, 9) blockiert wird,
   - **daß** die Kupplung (4, 5, 6) bzw. die Bremse (7, 8, 9) nach einer Schnellbefüllung mit einem konstanten Betätigungsdruck (p) beaufschlagt wird,

- **daß** der zeitliche Verlauf der Differenzdrehzahl (Δn) zwischen dem Eingang (17, 18, 19) und dem Ausgang (20) der Kupplung (4, 5, 6) bzw. der Bremse (7, 8, 9) erfaßt wird,
- **daß** der zeitliche Verlauf des Drehmoments (T) an einer Antriebswelle (14) des Getriebes (1) erfaßt wird,
- **daß** aus einer konstruktionsbedingten Kupplungskonstanten, dem Betätigungsdruck (p) und dem zugeordneten Drehmoment (T) ein dynamischer Reibwert ($\mu_{dynamisch}$) errechnet wird.

3. Verfahren nach Anspruch 1 oder 2, **dadurch gekennzeichnet, daß** es als Software in einem Speichermodul einer Getriebesteuerung (16) abgelegt ist und nach dem Abruf automatisch abläuft.

4. Verfahren nach einem der vorhergehenden Ansprüche, **dadurch gekennzeichnet, daß** die ermittelten Reibwerte ($\mu_{Abreiß}$, $\mu_{dynamisch}$) von der Getriebesteuerung (16) automatisch übernommen werden.

## Claims

1. Method for determining a coefficient of friction ($\mu$) of a hydraulically operated clutch (4, 5, 6) or brake (7, 8, 9) in a change-under-load transmission (1), **characterised in**

   - **that** a drive shaft (14) of the transmission (1) is driven with a certain torque (T),
   - **that** a driven shaft (15) of the transmission (1) is blocked with the clutch (4, 5, 6) or brake (7, 8, 9) engaged during a calibration operation,
   - **that** the operating pressure (p) of the clutch (4, 5, 6) or the brake (7, 8, 9) is reduced according to a predetermined variation in time,
   - **that** the differential speed (Δn) between the input (17, 18, 19) and the output (20) of the clutch (4, 5, 6) or the brake (7, 8, 9) is detected,
   - **that** the operating pressure (p) at which the differential speed (Δn) exceeds zero is established, and
   - **that** a breakaway coefficient of friction ($\mu_{Abbreiß}$) is calculated from the torque (T), the operating pressure (p) and a clutch constant which is determined by the construction.

2. Method according to the preamble of Claim 1, **characterised in**

   - **that** a driven shaft (15) of the transmission (1) is blocked with the clutch (4, 5, 6) or brake (7, 8, 9) disengaged during a calibration operation,
   - **that** the clutch (4, 5, 6) or the brake (7, 8, 9) is subjected to a constant operating pressure (p) following rapid filling,
   - **that** the variation in time of the differential speed (Δn) between the input (17, 18, 19) and the output (20) of the clutch (4, 5, 6) or the brake (7, 8, 9) is detected,
   - **that** the variation in time of the torque (T) at a drive shaft (14) of the transmission (1) is detected,
   - **that** a dynamic coefficient of friction ($\mu_{dynamisch}$) is calculated from the clutch constant, which is determined by the construction, the operating pressure (p) and the associated torque (T).

3. Method according to Claim 1 or 2, **characterised in that** it is stored as software in a storage module of a transmission control unit (16) and runs automatically following retrieval.

4. Method according to any one of the preceding Claims, **characterised in** the coefficients of friction ($\mu_{Abreiß}$, $\mu_{dynamisch}$) which are established are automatically assumed by the transmission control unit (16).

## Revendications

1. Procédé pour déterminer un coefficient de frottement ($\mu$) d'un embrayage (4, 5, 6) ou d'un frein (7, 8, 9) actionné hydrauliquement, inclus dans une transmission à changement sous charge (1), **caractérisé**

   - **en ce que** l'on entraîne un arbre d'entrée (14) de la transmission (1) avec un couple déterminé (T),
   - **en ce que**, dans un processus d'étalonnage, on bloque un arbre de sortie (15) de la transmission (1) dans l'état serré d'un embrayage (4, 5, 6) ou d'un frein (7, 8, 9),
   - **en ce que** l'on réduit la pression d'actionnement (p) de l'embrayage (4, 5, 6) ou du frein (7, 8, 9), en suivant une courbe prédéterminée de variation dans le temps,
   - **en ce que** l'on détecte la vitesse de rotation différentielle (Δn) entre l'entrée (17, 18, 19) et la sortie (20) de l'embrayage (4, 5, 6) ou du frein (7, 8, 9),
   - **en ce que** l'on détecte la pression d'activation (p) à laquelle la vitesse de rotation différentielle (Δn) est supérieure à zéro, et
   - **en ce que** l'on calcule un coefficient de frottement de rupture ($\mu_{Abreiss}$) sur la base du couple (T), de la pression d'activation (p) et d'une constante de l'embrayage fixée à la construction.

2. Procédé selon le préambule de la revendication 1, **caractérisé**

   - **en ce que**, pendant un processus d'étalonnage, on bloque un arbre de sortie (15) de la transmission (1) dans un état desserré d'un embrayage (4, 5, 6) ou d'un frein (7, 8, 9),
   - **en ce que**, après un remplissage rapide, on charge l'embrayage (4, 5, 6) ou le frein (7, 8, 9) avec une pression d'activation (p) constante,
   - **en ce que** l'on détecte la courbe de variation dans le temps de la vitesse de rotation différentielle ($\Delta n$) entre l'entrée (17, 18, 19) et la sortie (20) de l'embrayage (4, 5, 6) ou du frein (7, 8, 9),
   - **en ce que** l'on détecte la courbe de variation dans le temps du couple (T) sur l'arbre d'entrée (14) de la transmission (1),
   - **en ce que** l'on calcule un coefficient de frottement dynamique ($\mu_{dynamisch}$) sur la base d'une constante de l'embrayage fixée à la construction, de la pression d'actionnement (p) et du couple correspondant (T).

3. Procédé selon la revendication 1 ou 2, **caractérisé en ce qu'**il est enregistré sous la forme d'un logiciel dans un module de mémoire d'une commande de transmission (16) et qu'il se déroule automatiquement lorsqu'on l'a appelé.

4. Procédé selon l'une des revendications précédentes, **caractérisé en ce que** les coefficients obtenus ($\mu_{Abreiss}$, $\mu_{dynamisch}$) sont automatiquement pris en compte par la commande (16) de la transmission.

Fig. 1

Fig. 2

Fig. 3